# EUROPÄISCHE PATENTSCHRIFT

(11) **EP 1 669 121 B1**
(45) Veröffentlichungstag und Bekanntmachung des Hinweises auf die Patenterteilung: **05.01.2011**
(21) Anmeldenummer: 05111428.8
(22) Anmeldetag: 29.11.2005
(51) Int. Cl.: B01D 35/147, B01D 35/153, B01D 35/30

(54) **Flüssigkeitsfilter**
Liquid filter
filtre de liquide

(30) Priorität: 07.12.2004 DE 102004059061
(43) Veröffentlichungstag der Anmeldung: 14.06.2006
(73) Patentinhaber: MANN+HUMMEL GmbH, 71638 Ludwigsburg (DE)
(72) Erfinder: Kolczyk, Markus, 74395 Mundelsheim (DE); Schreckenberger, Dieter, 71672 Marbach / N. (DE)

(56) Entgegenhaltungen:
- EP-A- 0 547 896
- DE-A1- 19 925 635
- GB-A- 2 381 760
- US-A- 6 048 454

## Beschreibung

Die Erfindung betrifft einen Flüssigkeitsfilter wie er weit verbreitet als Wechselfilter für den Schmierölkreislauf von Brennkraftmaschinen zur Anwendung kommt. Weitere Einsatzmöglichkeiten sind beispielsweise Hydraulikkreisläufe in mobilen oder stationären Anlagen. Dabei werden im Wartungsfall das Filterelement und ein fest mit dem Filterelement verbundenes Gehäuse ausgetauscht. Ein derartiger Flüssigkeitsfilter ist beispielsweise aus der DE 198 18 334 bekannt. Hierbei wird der Flüssigkeitsfilter mit einem, an einer Verstärkungsplatte angeordnetem Gewinde, an einem zum Flüssigkeitsfilter korrespondierenden Flansch verschraubt. Um die Verbindung gegenüber der Umgebung abzudichten ist zwischen Flansch und Flüssigkeitsfilter eine axial wirkende Elastomerdichtung eingespannt.

Nachteilig dabei ist, dass die Spannkraft der Dichtung alleine durch das Anzugsdrehmoment und den Drehwinkel des Gewindes bestimmt wird. Weiterhin wird die Gewindeverbindung nur durch die Haftreibung der Dichtung gegenüber dem Flansch und dem Flüssigkeitsfilter gesichert. Dies hat zur Folge, dass sich Gewindeverbindung aufgrund von Außeneinflüssen wie z. B. Temperatur und/oder Schwingung lösen kann.

Die Patentschrift GB 2 381 760 A zeigt einen Wasserfilter, bei dem das Filtergehäuse mit einem Bajonettverschluss an einem Gegenstück befestigt wird. Der Bajonettverschluss wird filterseitig vom Filtergehäuse gebildet. Eine Endkappe des Filterelements stützt sich gegen das Gehäuse über einen Absatz in der Seitenwand im Gehäuse ab.

In der Offenlegungsschrift DE 199 25 635 A1 wird ein Hydraulikölbehälter mit einem innenliegend angeordneten Filtergehäuse beschrieben, bei dem das Filtergehäuse zweiteilig ausgeführt ist. Das Oberteil und das Unterteil werden innerhalb des Hydraulikölbehälters über Rastnasen verbunden.

In dem US-Patent US 6 048 454 ist ein Ölfilter offenbart, bei dem ein Gehäuseunterteil mit einem Gehäuseoberteil über einen separaten von außen zu montierenden Spannring verbunden wird. Dieser Spannring verbindet über je einen Kragen, der einstückig durch die Wandung der Gehäuseteile gebildet wird, die Gehäusehälften. Der Spannring ist nicht fest mit dem Gehäuse verbunden und wird zur Montage der Filtergehäuseteile mit einer Spannvorrichtung von außen um das Gehäuse gespannt. Das Gehäuseoberteil wird über Kupplungstücke mit Gewindemuttem an einem Befestigungsblock verschraubt.

Aufgabe der Erfindung ist es einen Flüssigkeitsfilter zu schaffen, welcher, unabhängig von einem definierten Anzugsdrehmoment, eine zuverlässige Befestigung und Abdichtung gegenüber einem Flansch erlaubt und schnell und einfach montierbar ist.

Diese Aufgabe wird durch die Merkmale der Patenansprüche gelöst.

### Vorteile der Erfindung

Der erfindungsgemäße Flüssigkeitsfilter weist im Wesentlichen ein Filtergehäuse, ein Filterelement und einen Anschlussbereich auf, an welchem Mittel zur Bildung einer formschlüssigen Verbindung mit einem Gegenpart angeordnet sind. Das Filtergehäuse kann beispielsweise als so genanntes Hybridbauteil gebildet werden. Dieses kann einen metallischen Topf aufweisen, der von einem Kunststoffring umspritzt wird. An dem Kunststoffring können wiederum Wirkflächen zur Bildung der formschlüssigen Verbindung angeordnet sein. Der Gegenpart ist vorzugsweise als ein Flanschgehäuse an einem Motorblock angeordnet. Die formschlüssige Verbindung wird aus Wirkflächen gebildet, welche am Flüssigkeitsfilter und am Gegenpart angeordnet sind und in einem befestigten Zustand ineinander greifen. Die Wirkflächen können Rippen, Nocken oder Stege sein, welche durch axiale und/oder radiale Bewegung des Flüssigkeitsfilters miteinander in Eingriff gebracht werden. Bei dieser Anordnung kann auf die Ausbildung einer Gewindeverbindung verzichtet werden. Die Wirkflächen können außerhalb des Zentrums des Flüssigkeitsfilters angeordnet werden. Dadurch kann auf ein plattenförmiges Bauteil, am offenen Ende des Filtergehäuses verzichtet werden, wodurch sich Materialkosten und Gewicht reduzieren lassen.

Gemäß der Erfindung bilden die Mittel zur formschlüssigen Verbindung zwischen Flüssigkeitsfilter und Gegenpart eine Bajonettverbindung. Die Bajonettverbindung entsteht durch eine relative Drehbewegung des Flüssigkeitsfilters gegenüber dem Flanschgehäuse. Dazu sind am Flüssigkeitsfilter und am Flanschgehäuse mehrere Konturen angeordnet, die miteinander in Eingriff kommen und eine Steigung gegenüber der Filterachse aufweisen. Die Steigung erstreckt sich über einen definierten Umfangswinkel und geht in einen parallel zu einem Dichtflansch verlaufenden Bereich über. Weiterhin sind die korrespondierenden Konturen dergestalt ausgebildet, das sie innerhalb der Drehbewegung eine Verrastung erzeugen und einen Anschlag zur Begrenzung der Drehbewegung herstellen können. Die Verrastung kann beispielsweise über einen zackenförmigen Verlauf der korrespondierenden Konturen erreicht werden. Alternativ kann die Verrastung auch über bewegliche Wirkelemente hergestellt werden, die in einer definierten Position in eine Kontur des Gegenparts oder des Flüssigkeitsfilters eingreifen. Dies kann beispielsweise eine federbelastete Kugel oder ein Stift sein, welcher in eine Bohrung des Gegenparts eingreift. Zwischen Flüssigkeitsfilter und Flanschgehäuse ist vorzugsweise eine Elastomerdichtung angeordnet, welche durch die Bajonettverbindung zwischen zwei korrespondierende Dichtflächen eingespannt wird. Diese Elastomerdichtung kann dabei sowohl axial als auch radial angeordnet sein. Bei axialer Anordnung der Elastomerdichtung kann diese die für die Rastverbindung notwendige Spannung erzeugen. Die Mittel zur Herstellung der Bajonettverbindung sind beispielsweise am Filtergehäuse oder an einem Anschlusselement auf einer Stirnseite fest mit Filtergehäuse verbunden. Diese Mittel begrenzen den zylindrischen Innenraum des Filtergehäuses auf einer Stirnseite und bilden gleichzeitig eine Kontur zur Abstützung des Filterelementes. Als Materialien eignen sich für das Filtergehäuse, wie auch für die Mittel zur Bildung der Bajonettverbindung, sowohl Metalle wie auch Kunststoffe z.B. Polyamid oder Polypropylen.

Die Vorteile dieser Anordnung erlauben es, ohne Hilfsmittel zwischen Flüssigkeitsfilter und Gegenpart eine definierte Verspannung herzustellen. Der Flüssigkeitsfilter wird vom Monteur auf das Flanschgehäuse angesetzt und aufgedreht, dabei ist der Drehwinkel durch einen Anschlag und/oder eine Rastung der Bajonettverbindung begrenzt. Durch die vorgegebene Steigung der Bajonettkontur ist die Einspannung der Dichtung zwischen Flüssigkeitsfilter und Flanschgehäuse definiert und unabhängig von Anzugsdrehmomenten gewährleistet. Dies erlaubt eine einfache und zuverlässige Montage und Demontage des Flüssigkeitsfilters. Bei der radialen Anordnung der Elastomerdichtung wird ein Festsitzen dieser auf der Oberfläche verhindert und somit ein leichtes Lösen des Flüssigkeitsfilters bei der Demontage gewährleistet.

Gemäß der Erfindung sind die Mittel zur Ausbildung der Bajonettverbindung an einem Verbindungsring angeordnet. Dieser ist an der offenen Stirnseite fest und dichtend mit dem Filtergehäuse verbunden und bildet das stirnseitige Ende. Die Mittel, welche die Bajonettverbindung herstellen, können dabei radial nach außen, innen oder in axialer Richtung der Filterachse ausgerichtet sein. Diese Mittel können den Verbindungsring überragen oder als Kontur in diesen eingeformt sein. Es bietet sich an, am Verbindungsring gleichzeitig eine Dichtungsnut zur Aufnahme einer Elastomerdichtung vorzusehen. Diese ist vorzugsweise an der Stirnseite oder an einer abgesetzten Kante des Verbindungsringes angeordnet. Eine nach innen ragende Kante oder ein Bund des Verbindungsringes kann als Auflagefläche zur Abstützung des Filterelementes genutzt werden. Der Verbindungsring wird vorzugsweise aus einem Metall oder einem Kunststoff im Urformverfahren, insbesondere im Spritzgussverfahren hergestellt. Er kann jedoch auch als Dreh-, Fräs- oder Tiefziehteil gefertigt werden.

Der Verbindungsring erlaubt es in vorteilhafter Weise mehrere Funktionen in einem Bauteil zu integrieren und dadurch eine einfache und wirtschaftlich günstige Herstellungsweise zu realisieren. Weiter erlaubt es der Verbindungsring im Vergleich zu einer stirnseitigen Platte, den Materialaufwand zu reduzieren und somit auch das Gewicht des Flüssigkeitsfilters erheblich zu minimieren. Bei im Urformverfahren hergestelltem Verbindungsring verbleiben keine Zerspanungsreste im Flüssigkeitsfilterelement, weil auf eine spanende Bearbeitung verzichtet werden kann. Da der Verbindungsring in direkter Nähe zum Dichtungsring positioniert werden kann, wird eine Durchbiegung der Stirnseite verhindert, wodurch eine bessere Stabilität gegenüber hohen Druckbelastungen erreicht wird.

Eine weitere Ausgestaltung der Erfindung verwendet als Filtergehäuse einen im Tiefziehverfahren hergestellten Blechtopf. An in diesem Verfahren hergestellten Filtergehäusen können zur Erleichterung der Befestigung auch Profile wie beispielsweise Längsrillen oder Mehrkantprofile angeformt werden. Diese Filtergehäuse weisen eine homogene Materialstärke auf und sind sehr druckstabil. Die Befestigung des Filtergehäuses mit dem Verbindungsring kann beispielsweise durch Bördelung oder Blechfalzen hergestellt werden.

Das Tiefziehverfahren erlaubt eine sehr hohe prozesssichere und wirtschaftlich sehr günstige Herstellung des Filtergehäuses.

Gemäß einer weiteren Ausführungsform ist das Filtergehäuse aus einem Spritzguss-, Druckguss- oder Fließpressteil gebildet. Dadurch kann das Filtergehäuse beispielsweise auch aus Kunststoffen wie Polyamid oder Polypropylen, oder aus Leichtmetallen wie Aluminiumlegierungen hergestellt werden. Dazuhin ist es möglich, Bauteile wie beispielsweise den Verbindungsring als Einlegeteil im Verbund mit den genannten Fertigungsverfahren herzustellen.

Eine weitere positive Ausgestaltung der Erfindung stützt das Filterelement durch eine Formscheibe am Zwischenring ab. Die Formscheibe stützt dabei das Filterelement oder eine das Filterelement abdichtende Endscheibe gegenüber dem Verbindungsring ab. Dabei erstreckt sich die Formscheibe bis in den Wandungsbereich des Gehäuses und zentriert das Filterelement im Gehäuse. Grundsätzlich kann die Formscheibe aus Kunststoff oder Metall hergestellt werden. Um mögliche Fertigungstoleranzen auszugleichen kann die Formscheibe aus einem elastischen Material gebildet sein. Hierzu eignet sich beispielsweise ein Federblech. Dadurch hält die Formscheibe das Filterelement in seiner axialen Position. Die Formscheibe liegt gegenüber dem Verbindungsring abschnittsweise auf und gewährleistet somit Strömungskanäle für den Zufluss des ungefilterten Öles auf der Rohseite.

Die Anordnung der Formscheibe erlaubt es vorteilhaft, die einzelnen Bauteile variabel zu gestalten, so kann z.B. die gleiche Formscheibe für mehrere Filtertypen verwendet werden. Zudem ist das Filterelement radial nicht fixiert, wodurch die radiale Toleranz zwischen Filterelement und Verbindungsring durch die Formscheibe ausgeglichen werden kann.

In einer weiteren vorteilhaften Variante der Erfindung erstreckt sich die Formscheibe über die gesamte Stirnseite des Filtermediums und ist mit diesem dichtend und unlösbar verbunden. Dadurch bildet die Formscheibe gleichzeitig die Endscheibe des Filterelementes und gewährleistet die Abdichtung des Filtermediums, die axiale Abstützung sowie die Zentrierung im Filtergehäuse. Die Formscheibe kann dabei auch mit einem im Zentrum des Filtermediums angeordneten Mittelrohr verbunden sein.

Dies reduziert den Aufwand an Einzelteilen und erspart in vorteilhafter Weise Material-, Herstellungs-, Montage- und Logistikkosten.

Gemäß einer weiteren Ausgestaltung der Erfindung ist an der Formscheibe eine Rücklaufsperrmembran angeordnet. Dazu muß die Formscheibe eine dichte Verbindung gegenüber dem Verbindungsring herstellen. Diese bewirkt eine Ventilfunktion, welche das anströmende Öl auf der Rohseite in Richtung des Filtermediums passieren lässt und einen Rücklauf des Öls verhindert. Die Rücklaufsperrmembran weist gegenüber der Formscheibe eine größere Elastizität auf und kann beispielsweise durch Kleben oder Schmelzen auf der Formscheibe befestigt werden. Alternativ kann die Membran auch als Spritzgussteil im 2-Komponenten Verfahren gemeinsam mit der Formscheibe hergestellt werden. Die Rücklaufsperrmembran kann in geschlossenem Zustand mit einer Dichtkante beispielsweise radial an der inneren Wandung des Filtergehäuses oder axial an einer Kontur des Verbindungsringes anliegen.

Eine weitere vorteilhafte Variante der Erfindung nutzt die Formscheibe und/oder die Endscheibe gleichzeitig als Dichtelement gegenüber der im Zentrum des Filterelementes liegenden Reinseite. Der Flüssigkeitsfilter wird üblicherweise durch die Außenseite des zylindrischen Filtermediums rohseitig angeströmt und durch einen am Gegenpart angeordneten Einströmstutzen im Zentrum des Filtermediums reinseitig abgeströmt. Die Abdichtung zwischen Rein- und Rohseite kann durch die Endscheibe erfolgen. Bei einer Ausführung mit metallischer Endscheibe kann diese Abdichtung durch eine Elastomerdichtung, einen Vliesring, einen O-Ring oder durch einen Metallkonus hergestellt werden. Bei einer Ausführung mit Kunststoffendscheibe kann die Abdichtung durch eine Elastomerdichtung einen Vliesring, einen O-Ring oder einen Kunststoffkonus gebildet sein. Bei der Anordnung der Dichtpaarung kann die Dichtung außerhalb des Einströmstutzens als Außendichtung oder innerhalb des Einströmstutzens als Innendichtung ausgeführt sein. Bei der Ausführung als Innendichtung weist die Endscheibe einen Ringbund oder einen Rohrabschnitt auf, der in die Innenseite des Einströmstutzens hineinragt. Die Endscheibe kann dabei auch als so genannte Folienendscheibe ausgeführt sein. Diese ist beispielsweise aus Nitrilkautschuk gebildet und an einer Stirnseite des Filtermediums eingegossen. Bei der Endscheibe aus Nitrilkautschuk kann die Endscheibe durch eine Stützscheibe verstärkt werden, welche einstückig mit einem Mittelrohr hergestellt ist und auf der Endscheibe aufliegt. Dadurch ist es möglich das Filterelement mit einem Federelement gegenüber einer geschlossenen Gehäuseseite abzustützen.

Diese Gestaltungsvarianten erlauben es vorteilhaft, das Dichtkonzept zwischen Roh- und Reinseite in die Endscheibe bzw. die Formscheibe zu integrieren und an die jeweilige Einbausituation anzupassen.

Um das Filtermedium in verschmutztem Zustand oder bei dickflüssigem Öl vor Überdruck zu schützen, ist in einer weiteren Ausgestaltung an einer dem Ölauslass gegenüberliegenden Endscheibe ein Bypassventil angeordnet. Dieses kann beispielsweise als Kunststoffventil in der Endscheibe integriert werden oder auch korrespondierend mit einem Mittelrohr angeordnet sein. Das Bypassventil kann beispielsweise auch in einem Federblech integriert werden, welches das Filterelement gegenüber der geschlossenen Seite des Filtergehäuses abstützt. Dabei ist das Bypassventil dergestalt im Federblech integriert, dass es mit einer zentralen Öffnung der Endscheibe korrespondiert. Es ist auch möglich, das Bypassventil als ein Schlauchventil an einem Mittelrohr anzuordnen. Dadurch ist das Bypassventil in einfacher und wirtschaftlich vorteilhafter Weise in das Filterelement integrierbar. In einer vorteilhaften Variante ist das Filtergehäuse mit dem Verbindungsring durch Kleben oder Schweißen befestigt. Hierbei kommt das Schweißen bei einheitlichen Werkstoffpaarungen zur Auswahl. Alternativ kann die Verbindung auch durch eine Bördelung erreicht werden, wobei die Bördelung derart ausgebildet werden kann, dass eine Dichtheit gewährleistet ist. Bei einer Kombination von Kunststoff und Metall ist eine Klebe-oder Fügeverbindung auszuwählen. Beide Verfahren bilden eine dichte Verbindung und sind in der Herstellung einfach und zuverlässig. Gleichzeitig kann auf eine zusätzliche Abdichtung zwischen Verbindungsring und Filtergehäuse verzichtet werden, wodurch ein wirtschaftlicher Vorteil entsteht.

Ein Gegenpart zur Befestigung des Filtergehäuses ist üblicherweise ein Flanschgehäuse, welches an einem Aggregat, beispielsweise einem Motorblock, montiert ist. Der Gegenpart kann aber auch einstückig mit dem Aggregat hergestellt sein. Dabei sind am Gegenpart Konturen, insbesondere gewindeähnliche Rippen angeordnet, die zur Herstellung einer Bajonettverbindung geeignet sind. Zur Herstellung einer dichten Verbindung ist zwischen Flüssigkeitsfilter und Gegenpart ein Dichtmittel angeordnet. Dieses kann beispielsweise eine Elastomerdichtung oder eine Konusverbindung sein. Im Fall einer Elastomerdichtung kann diese am Flüssigkeitsfilter angeordnet sein und mit einer Dichtfläche des Gegenparts korrespondieren. Selbstverständlich kann die Elastomerdichtung auch am Gegenpart und die Dichtfläche am Flüssigkeitsfilter angeordnet werden.

Gemäß einer vorteilhaften Ausgestaltung ist der Gegenpart als ein Adapterelement angeordnet. Dieses weist auf der Seite des Flüssigkeitsfilters Mittel zur Herstellung einer Bajonettverbindung und auf der, dem Aggregat zugewandten Seite eine Gewindeverbindung mit einem Flansch auf.

Dieses Adapterelement erlaubt es vorteilhaft, den erfinderischen Flüssigkeitsfilter an einen Flansch zu montieren, der für einen herkömmlichen, mit Gewindeanschluss versehenen Flüssigkeitsfilter vorgesehen ist. Dadurch kann ein herkömmlicher Flansch auf einfache Weise umgerüstet werden.

In einer vorteilhaften Variante weist das Adapterelement auf der Seite des Flüssigkeitsfilters eine Gewindeverbindung und auf der dem Aggregat zugewandten Seite Mittel zur Herstellung einer Bajonettverbindung mit einem Flansch auf.

Dadurch ist es vorteilhaft möglich, an einem Bajonettflansch einen herkömmlichen, mit Gewindeanschluss ausgestatteten Flüssigkeitsfilter zu montieren.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ausführungsbeispiele der Erfindung werden in der Zeichnung anhand von schematischen Darstellungen beschrieben. Hierbei zeigen
- Figur 1: einen erfindungsgemäßen Flüssigkeitsfilter mit Gegenpart im Vollschnitt,
- Figur 2: eine weitere Variante des Flüssigkeitsfilters im Vollschnitt,
- Figur 3: ein als Gegenpart dienendes Adapterelement im Vollschnitt und
- Figur 4: eine alternative Ausgestaltung des Adapterelementes.

### Beschreibung der Ausführungsbeispiele

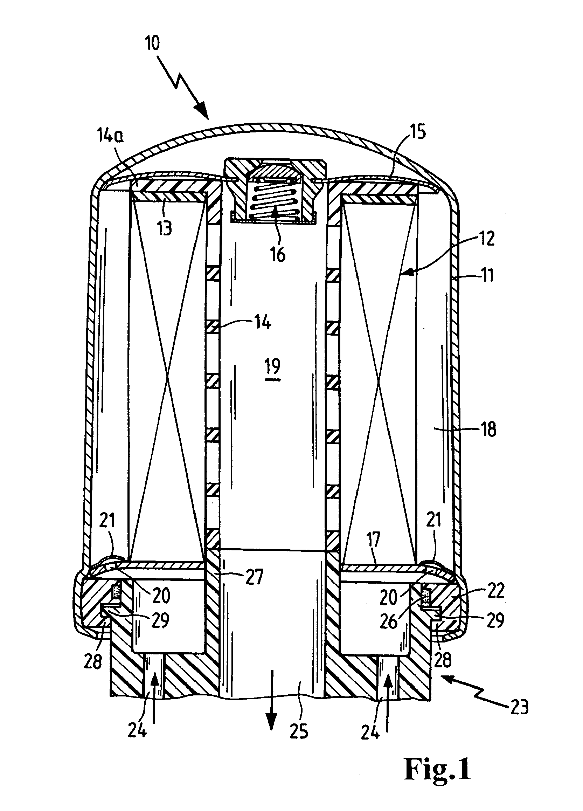

Figur 1 zeigt einen Flüssigkeitsfilter 10, welcher in einem Filtergehäuse 11 ein Filtermedium 12 aufweist. Das Filtermedium 12 ist zwischen einer oberen Endscheibe 13 und einer unteren Formscheibe 17 dichtend gefasst. Die obere Endscheibe 13 kann beispielsweise aus einem elastischen Nitrilkautschuk und die untere Formscheibe 17 aus einem Thermoplast wie beispielsweise Polyamid oder Polypropylen gebildet sein. Das hohlzylindrische Filtermedium 12 wird an der zylindrischen Innenseite von einem strömungsdurchlässigen Mittelrohr 14 gestützt, welches mit einem an der oberen Stirnseite angeordneten Rohrbund 14a einstückig hergestellt ist. Gegenüber dem Gehäuse 11 ist das Filtermedium 12 über den Rohrbund 14a durch ein Federblech 15 abgestützt. Durch das Federblech 15 wird das Filtermedium 12 im Gehäuse 11 zentriert und axial gesichert. Weiter ist an dem Federblech 15 ein Bypassventil 16 befestigt und wird durch dieses dichtend an den Rohrbund 14a angedrückt. Die Formscheibe 17 überragt das Filtermedium 12 radial bis zur Wandung des Filtergehäuses 11 und liegt in axialer Richtung des Filtermediums 12 an einem Verbindungsring 22 an, wodurch das Filtermedium 12 im Gehäuse 11 zentriert und axial gesichert ist. Die Berührflächen zwischen Formscheibe 17 und Verbindungsring 22 sind zueinender dichtend, so dass im Bereich der Berührflächen kein Zurückfliesen der Flüssigkeit möglich ist. In der Formscheibe 17 sind Strömungsöffungen 20 angeordnet, die korrespondierend mit den Sperrmembranen 21 eine Ventilfunktion bewirken und ein rohseitiges Zurückströmen von Öl verhindern. Der Verbindungsring 22 ist mit der Wandung des Gehäuses 11 durch die Formgebung des Gehäuses 11 dichtend verbunden. Diese Verbindung kann durch Kleben, Bördeln oder Schweißen hergestellt oder unterstützt werden. Zwischen Gehäuse 11 und Verbindungsring 22 kann beispielsweise auch eine elastische Formdichtung angeordnet sein. Der Verbindungsring 22 stellt eine lösbare Verbindung mit einem teilweise dargestellten Gegenpart 23 her. Dieser weist eine Anströmseite 24 und eine Abströmseite 25 auf, welche im korrespondierenden Bereich mit dem Flüssigkeitsfilter 10 gegeneinander abgedichtet werden müssen. Die Abdichtung gegenüber der Umgebungsseite erfolgt radial durch eine Elastomerdichtung 26, die zwischen Gegenpart 23 und Verbindungsring 22 in einer Nut angeordnet ist. Um die Reinseite 18 gegenüber der Rohseite 19 abzudichten, ragt ein zylindrischer Stutzen 27 des Gegenparts 23 in den als Endscheibe dienenden Verbindungsring 17. Die Befestigung des Gegenparts 23 gegenüber dem Flüssigkeitsfilter 10 erfolgt durch mehrere am Verbindungsring 22 angeordnete Haltenasen 28, welche mit am Gegenpart 23 vorhandenen Führungsstegen 29 korrespondieren. Dazu sind die gewindeähnlich gestalteten Führungsstege 29 radial um den Gegenpart 23 angeformt. Durch Drehen des Flüssigkeitsfilters 10 wird dieser axial an den Gegenpart 23 angespannt, wodurch eine Bajonettverbindung entsteht. Um ein Losdrehen des Flüssigkeitsfilters 10 zu verhindern, kann auf dem Führungssteg 29 beispielsweise durch eine Zick-Zack-Kontur eine Verrastung erreicht werden.

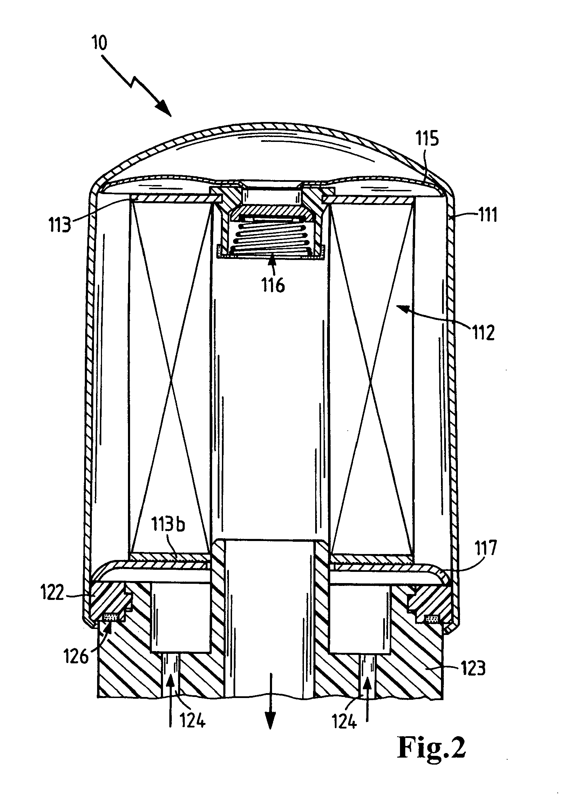

Figur 2 zeigt eine weitere Variante des Flüssigkeitsfilters 10. Der Figur 1 entsprechende Bauteile sind mit denselben Bezugszeichen versehen. Das Filtermedium 112 ist dabei durch das Federblech 115 und die Formscheibe 117 im Gehäuse 111 zentriert und axial befestigt. Das Bypassventil 116 ist durch das Federblech 115 direkt an die obere Endscheibe 113 gedrückt. Eine untere Endscheibe 113b und die obere Endscheibe 113 können beide aus Blech hergestellt sein. Die Formscheibe 117 ist als einzelnes Bauteil hergestellt und kann mit der unteren Endscheibe 113b beispielsweise verklebt oder gefügt sein. Die Elastomerdichtung 126 ist in einer Nut des Verbindungsringes 122 in axialer Richtung angeordnet. Der Gegenpart 123 weist dazu eine korrespondierende Planfläche auf und ist nur teilweise dargestellt.

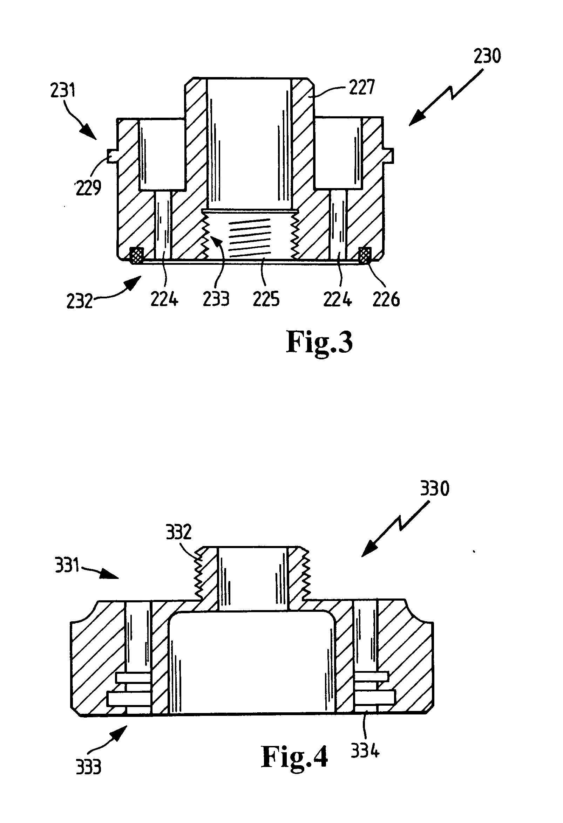

In Figur 3 ist der Gegenpart als Bajonettadapter 230 ausgeführt. Dieser dient zur Adaption eines, mit einem Bajonettanschluss ausgestatteten Flüssigkeitsfilters 10 (Figur 1) an einen herkömmlichen, mit Gewindeanschluss versehenen Aufnahmeflansch (nicht dargestellt). Dazu verfügt der Bajonettadapter 230 auf einer Seite über eine Bajonettmuffe 231 und auf der gegenüber liegenden Seite über eine Gewindemuffe 232. Die Bajonettmuffe 231 weist als wesentliches Mittel zur Bildung der Bajonettmuffe den Führungssteg 229 und den Stutzen 227 auf. Als wesentliche Mittel zur Bildung der Gewindemuffe 232 sind ein Innengewinde 233 und die Elastomerdichtung 226 vorgesehen. Dadurch ist durch die Gewindemuffe 232 eine feste, lösbare und dichte Verbindung zu einem Aufnahmeflansch (nicht dargestellt) herstellbar. Die Flüssigkeitsanströmung erfolgt durch den Bajonettadapter 230 hindurch durch die Anströmseite 224 und die Abströmung durch die Abströmseite 225.

Figur 4 zeigt einen Gewindeadapter 330, der zur Adaption eines herkömmlichen Wechselfilterelementes mit einem Gewindeanschluss (nicht dargestellt) und einem Gegenpart, welcher für einen Bajonettanschluss (nicht dargestellt) vorgesehen ist, dient. Dazu weist der Gewindeadapter 330 auf einer Gewindeseite 331 als wesentliches Element einen Gewindestutzen 332 auf. Die Gewindeseite 331 korrespondiert mit dem nicht dargestellten Wechselfilterelement. Eine Bajonettseite 333 korrespondiert an der gegenüberliegenden Seite mit einem Gegenpart (nicht dargestellt), welcher Mittel zur Bildung einer Bajonettverbindung aufweist. Dazu sind auf der Bajonettseite 333 die Bajonettkonturen 334 eingeformt.

## Patentansprüche

1. Flüssigkeitsfilter, insbesondere für Brennkraftmaschinen, aufweisend ein Filtergehäuse mit einem darin angeordneten, im Wesentlichen hohlzylindrischen Filterelement, wobei das Filterelement eine Rohseite von einer Reinseite dichtend trennt, wobei das Filtergehäuse mit einem Gegenpart lösbar und dichtend verbindbar ist,
wobei am axialen Ende des Filtergehäuses Mittel zur Ausbildung einer lösbaren, formschlüssigen Bajonettverbindung angeordnet sind, **dadurch gekennzeichnet, dass** das Filterelement korrespondierend mit dem gehäuseseitigen Mittel zur Ausbildung der Bajonettverbindung verbunden ist, derart, dass sich das Filterelement am gehäuseseitigen Mittel abstützt und die Bajonettverbindungs-Mittel zur Ausbildung der formschlüssigen Verbindung des Filtergehäuses an einem Verbindungsring angeordnet sind, wobei dieser als separates Bauteil unlösbar mit dem Filtergehäuse verbunden ist.

2. Flüssigkeitsfilter nach einem der vorhergehenden Ansprüche, **dadurch gekennzeichnet, dass** das Filtergehäuse ein im Tiefziehverfahren hergestellter Blechtopf ist.

3. Flüssigkeitsfilter nach Anspruch 1, **dadurch gekennzeichnet, dass** das Filtergehäuse durch Spritzgießen, Druckgießen oder Fließpressen hergestellt ist.

4. Flüssigkeitsfilter nach Anspruch 3, **dadurch gekennzeichnet, dass** das Filterelement durch eine Formscheibe am Verbindungsring abgestützt ist.

5. Flüssigkeitsfilter nach Anspruch 4, **dadurch gekennzeichnet, dass** die Formscheibe gleichzeitig eine Endscheibe des Filterelementes ist.

6. Flüssigkeitsfilter nach Anspruch 4 bis 5, **dadurch gekennzeichnet, dass** die Formscheibe eine Rücklaufsperrmembran aufweist.

7. Flüssigkeitsfilter nach einem der vorhergehenden Ansprüche, **dadurch gekennzeichnet, dass** das Filterelement zwei Endscheiben aufweist, wobei wenigstens eine Endscheibe im zentralen Bereich Mittel zur Abdichtung gegenüber einem weiteren Element aufweist.

8. Flüssigkeitsfilter nach Anspruch 7, **dadurch gekennzeichnet, dass** eine zweite, gegenüber dem Öleinlass angeordnete Endscheibe ein Bypassventil aufweist.

9. Flüssigkeitsfilter nach einem der vorhergehenden Ansprüche, **dadurch gekennzeichnet, dass** das Filtergehäuse mit dem Verbindungsring durch Bördeln, Kleben oder Schweißen verbunden ist.

## Claims

1. Liquid filter, in particular for internal combustion engines, featuring a filter housing with a substantially hollow cylindrical filter element disposed therein, the filter element dividing sealingly an entry side from a clean side, the filter housing being detachably and sealingly connectable with a counterpart, means being disposed at the axial end of the filter housing for forming a detachable positive bayonet connection, **characterized in that** the filter element is correspondingly connected with the housing-sided means for forming the bayonet connection such that the housing-sided means supports the filter element and that the bayonet connection means for forming the positive connection of the filter housing are disposed at a connecting ring, the connecting ring being connected non-detachably as separate component with the filter housing.

2. Liquid filter according to one of the above claims, **characterized in that** the filter housing is a sheet-metal pot manufactured by the deep-drawing process.

3. Liquid filter according to claim 1, **characterized in that** the filter housing is manufactured by injection molding, die casting or extrusion.

4. Liquid filter according to claim 3, **characterized in that** the filter element is supported by a forming wheel at the connecting ring.

5. Liquid filter according to claim 4, **characterized in that** the forming wheel is also an end plate of the filter element.

6. Liquid filter according to claims 4 to 5, **characterized in that** the forming wheel features a return stop diaphragm.

7. Liquid filter according to one of the above claims, **characterized in that** the filter element features two end plates, at least one end plate featuring in the central area means for sealing against another element.

8. Liquid filter according to claim 7, **characterized in that** a second end plate opposite the oil inlet features a bypass valve.

9. Liquid filter according to one of the above claims, **characterized in that** the filter housing is connected with the connecting ring by flanging, gluing or welding.

## Revendications

1. Filtre à liquide, en particulier pour les moteurs à combustion interne, présentant un boîtier de filtre avec un élément filtrant placé à l'intérieur et essentiellement en forme de cylindre creux, l'élément filtrant séparant de manière étanche un côté non filtré d'un côté filtré, le boîtier de filtre étant doté d'une contrepartie pouvant être détachée et assemblée de manière étanche, des éléments destinés à former un raccord à baïonnette détachable et craboté étant disposés à l'extrémité axiale du boîtier de filtre, **caractérisé en ce que** l'élément filtrant est relié de manière correspondante avec l'élément côté boîtier en vue de former le raccord à baïonnette, de sorte que l'élément filtrant s'appuie sur l'élément côté boîtier et que les éléments du raccord à baïonnette, en vue de former l'assemblage craboté du boîtier de filtre, sont disposés sur une bague de jonction laquelle est reliée de manière fixe en tant que composant individuel au boîtier de filtre.

2. Filtre à liquide selon l'une des revendications précédentes, **caractérisé en ce que** le boîtier de filtre est un pot en tôle réalisé par emboutissage.

3. Filtre à liquide selon la revendication 1, **caractérisé en ce que** le boîtier de filtre est réalisé par moulage par injection, moulage sous pression ou extrusion.

4. Filtre à liquide selon la revendication 3, **caractérisé en ce que** l'élément filtrant est soutenu par un disque moulé sur la bague de jonction.

5. Filtre à liquide selon la revendication 4, **caractérisé en ce que** le disque moulé est à la fois une plaque d'extrémité de l'élément filtrant.

6. Filtre à liquide selon les revendications 4 à 5, **caractérisé en ce que** le disque moulé présente une membrane anti-retour.

7. Filtre à liquide selon l'une des revendications précédentes, **caractérisé en ce que** l'élément filtrant présente deux plaques d'extrémité, au moins une plaque d'extrémité présentant dans la zone centrale des éléments servant à l'étanchéité vis-à-vis d'un autre élément.

8. Filtre à liquide selon la revendication 8, **caractérisé en ce qu'**une deuxième plaque d'extrémité disposée en face de l'entrée d'huile présente une soupape de dérivation.

9. Filtre à liquide selon l'une des revendications précédentes, **caractérisé en ce que** le boîtier de filtre est relié à la bague de jonction par bordage, collage ou soudage.
